(19) Europäisches Patentamt / European Patent Office / Office européen des brevets

(11) **EP 1 821 549 A1**

(12) **EUROPEAN PATENT APPLICATION**
published in accordance with Art. 158(3) EPC

(43) Date of publication:
**22.08.2007 Bulletin 2007/34**

(51) Int Cl.:
**H04N 9/09** (2006.01)

(21) Application number: **05793742.7**

(22) Date of filing: **12.10.2005**

(86) International application number:
**PCT/JP2005/018751**

(87) International publication number:
**WO 2006/041071 (20.04.2006 Gazette 2006/16)**

(84) Designated Contracting States:
**DE FR GB**

(30) Priority: **13.10.2004 JP 2004298701**

(71) Applicant: **MATSUSHITA ELECTRIC INDUSTRIAL CO., LTD.**
**Osaka 571-8501 (JP)**

(72) Inventors:
• **YANO, Shuji,**
c/o Mats. El. Ind. Co., Ltd., IPROC
Chuo-ku, Osaka-shi, Osaka 540-6319 (JP)

• **SOH, Shoji,**
c/o Mats. El. Ind. Co., Ltd., IPROC, Ip Dev. Ct.
Osaka-shi, Osaka 540-6319 (JP)
• **IZUMISAWA, Kunio,**
c/o Mats. El. Ind. Co., Ltd., IPROC
Chuo-ku, Osaka-shi, Osaka 540-6319 (JP)
• **OKAWA, Keisuke,**
c/o Mats. El. Ind. Co., Ltd., IPROC
Osaka-shi, Osaka 540-6319 (JP)

(74) Representative: **Menges, Christian Alexander**
**Diehl & Partner GbR.**
**Augustenstr. 46**
**80333 Munich (DE)**

(54) **IMAGE PICKUP DEVICE**

(57) An image pickup device includes a horizontal inversion section 6 for horizontally inverting at least a third one of first to third pixels signals to be outputted from individual CCD units 2a to 2c corresponding to R, G, and B, and a CCD actuation control section 9 capable of controlling the first to third CCD units 2a to 2c so that pixels, 2n+1 (n= 0, 1, 2, ...) in each set, in a horizontal direction are subjected to the pixels addition set by set.

The CCD actuation control section 9 performs control such that the second pixel signal is subjected to the pixel addition at timings delayed by n pixels with respect to timings for the first pixel signal, and the third pixel signal is subjected to the pixel addition at timings delayed by n pixels with respect to the timings for the second pixel signal. With this image pickup device, a high-sensitivity image can be obtained with the resolution impairment being suppressed.

FIG. 1

EP 1 821 549 A1

**Description**

Technical Field

The present invention relates to an image pickup device for achieving high sensitivity by pixel addition.

Background Art

Recently, an image pickup device such as a video camera or a digital still camera incorporates three CCD units, which are image pickup elements of one kind, so as to decompose light signals from a subject into three primary colors of red (R), green (G), and blue (B) and subject the same to signal processing, to generate an image signal. By so doing, a high image quality is achieved.

Further, a recent image pickup device has a "high-sensitivity image pickup function" with which a bright image can be picked up without flashing a fill light such as a strobe light in a site where the light amount is insufficient. The high-sensitivity image pickup function is a function for brightening an image signal as a whole by adding a plurality of image signals that have been subjected to photoelectric conversion at image pickup elements.

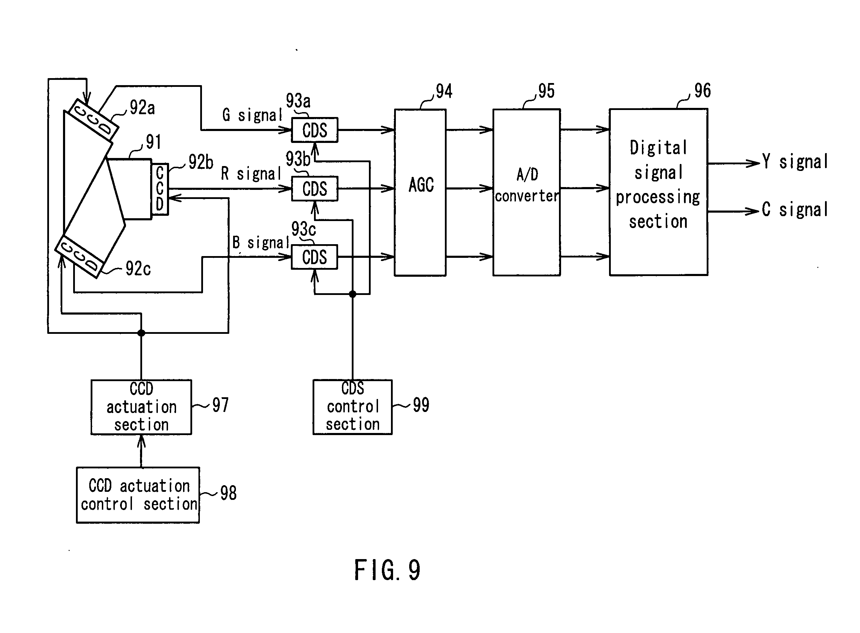

FIG. 9 is a block diagram illustrating a configuration of a conventional image pickup device. In FIG. 9, a prism 91 decomposes a subject image into three primary colors of R (red), G (green), and B (blue). Solid image pickup elements (hereinafter referred to as CCD units) 92a to 92c convert light signals decomposed into R, G, and B components by the prism 91 into electric signals of R, G, and B, respectively. It should be noted that the CCD unit 92a is a CCD unit that subjects a B signal to photoelectric conversion (the CCD unit is hereinafter referred to as B-CCD unit), the CCD unit 92b is a CCD unit that subjects a G signal to photoelectric conversion (the CCD unit is hereinafter referred to as G-CCD unit), and the CCD unit 92c is a CCD unit that subjects a R signal to photoelectric conversion (the CCD unit is hereinafter referred to as R-CCD unit).

Correlation double sampling sections (hereinafter referred to as CDS sections) 93a to 93c perform sample-and-hold actions with respect to outputs of the CCD units 92a to 92c, respectively, thereby reducing noise. An automatic gain control amplification section (hereinafter referred to as AGC section) 94 performs gain control with respect to output signals fed from the CDS sections 93a to 93c so as to keep certain constant signal levels. An analog-digital converter (hereinafter referred to as A/D converter) 95 converts an analog signal fed from the AGC section 94 into a digital signal. The digital signal processing section 96 performs a digital signal processing operation with respect to a digitalized image signal fed from the A/D converter 95 so as to output a luminance signal (hereinafter referred to as Y signal) and a chrominance difference signal (hereinafter referred to as C signal).

A CCD actuation section 97 actuates CCD units 92a to 92c, more specifically so that a vertical transfer action and a horizontal transfer action are performed in the CCD units 92a to 92c. A CCD actuation control section 98 controls the CCD actuation section 97 so that the pixel addition or the like is performed. The CDS control section 99 controls sampling points of the CDS sections 93a to 93c.

The following describes operations of a conventional image pickup device.

In FIG. 9, incident reflection light from a subject is decomposed into components of three primary colors of R, G, and B by the prism 91. Among the components obtained by the decomposition of the light signal, the B, G, and R signals are fed to the CCD units 92a, 92b, and 92c, respectively, and are converted into analog electric signals before being outputted.

The analog electric signals outputted by the CCD units 92a to 92c are fed to the CDS sections 93a to 93c, and the CDS sections 93a to 93c perform sample-and-hold actions with respect to both of the reset portions and the data portions of the analog electric signals. Next, by calculating differentials between the reset portions and the data portions, reset noise of CCD units is reduced. The timings of the sample-and-hold actions of the CDS sections 93a to 93c are controlled by the CDS control sections 99.

The signals outputted by the CDS sections 93a to 93c are amplified by the AGC section 94 to certain constant signal levels. The output signals of the AGC section 94 are converted into digital signals by the A/D converter 95, and fed to the digital signal processing section 96. The digital signal processing section 96 performs a matrix operation with respect to the R, G, and B signals fed thereto and generates and outputs the Y signal and the C signal.

On the other hand, in the case where an amount of light entering the prism is sufficient (e.g. in the case of outdoor picture taking during the daytime), the CCD actuation control section 98 controls the CCD actuation section 97 so that the CCD actuation section 97 performs normal actuation. In other words, the control is performed so that the pixel addition is not carried out. In the case where a light amount in the picture taking environment is insufficient (e.g. picture taking at nighttime, indoor picture taking, etc.), the horizontal-direction pixel addition control is performed with respect to the CCD actuation section 97, whereby a high-sensitivity image is obtained.

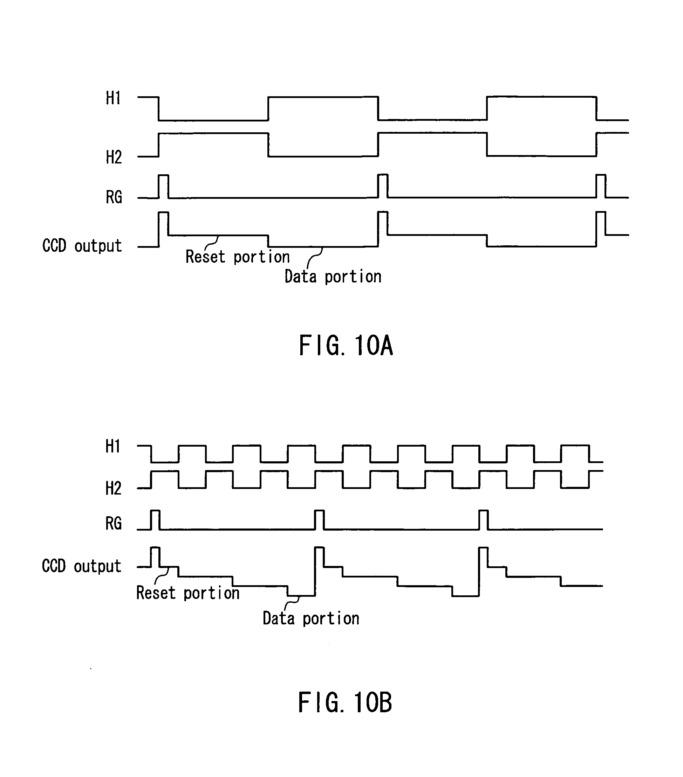

FIG. 10A is a timing chart showing actions during a normal actuation by the CCD actuation section 97. FIG. 10B is a timing chart showing an action during the pixel addition by the CCD actuation section 97.

As shown in FIG. 10A, during the normal actuation, the CCD actuation control section 98 controls the CCD actuation section 97 so that pulse cycles of actuation pulses H1 and H2 of the horizontal transfer section of the CCD unit coincide with a cycle of a reset pulse RG of a charge detection amplification section arranged behind the horizontal transfer section in the CCD unit.

On the other hand, as shown in FIG. 10B, during the pixel addition, the CCD actuation section 97 is controlled so that the reset pulse RG has a cycle twice the cycle of the pulses H1 and H2. This causes signal charges for two consecutive pixels fed from the horizontal transfer section to be accumulated in the charge detection amplification section without reset. In other words, the pixel addition is carried out. As a result, as indicated by the data portion shown in FIG. 10B, a signal level approximately twice the signal level of the data portion during the normal actuation can be obtained.

Besides, a "pixel shift technique" is available, with which a high-resolution image can be obtained. The following describes the pixel shift technique.

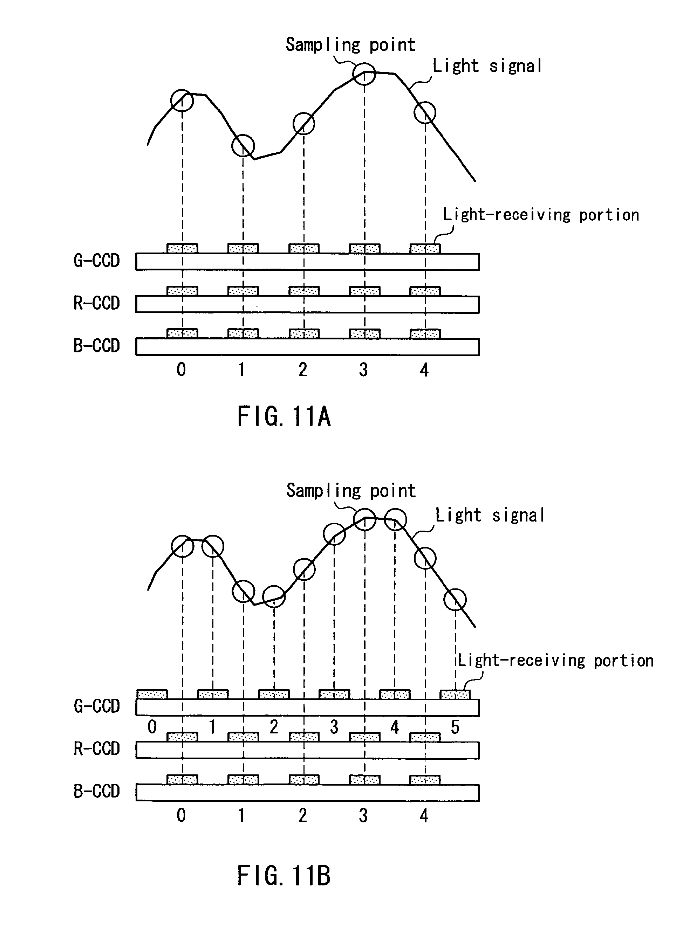

FIG. 11A is a schematic view illustrating the spatial position relationship of CCD units in the case where the horizontal pixel shift is not carried out (this case hereinafter is referred to as "case without horizontal pixel shift arrangement"), and FIG. 11B is a schematic view illustrating the spatial position relationship of CCD units in the case where the horizontal pixel shift is carried out (this case hereinafter is referred to as "case with horizontal pixel shift arrangement").

In the "case without horizontal pixel shift arrangement" shown in FIG. 11A, the CCD units corresponding to R, G, and B, respectively, are arranged at the same positions spatially with respect to the horizontal direction. In the "case with horizontal pixel shift arrangement" shown in FIG. 11B, the R-CCD unit and the B-CCD unit are arranged with a shift equivalent to 1/2 pixel interval with respect to the G-CCD unit spatially, with respect to the horizontal direction. It should be noted that each shift amount Wh of the CCD units in the shift arrangement satisfies the relationship expressed by the following equation:

$$Wh = (1+a)Ph/2$$

In the foregoing formula, "Ph" represents a space between adjacent pixels in the horizontal direction in each CCD unit. "a" represents a value determined with errors in the arrangements and sizes of each CCD unit when it is mounted being taken into consideration, and usually the value "a" satisfies $a \leq \pm 0.1$, preferably $a \leq \pm 0.05$, and more preferably $a=0$. In other words, the resolution enhancement effect is improved as the value of "a" is smaller.

As shown in FIG. 11B, in the "case with horizontal pixel shift arrangement", to obtain a luminance signal, the G signal and another signal are added in equal proportions, whereby an aliasing distortion generated by a sampling operation by a CCD unit is removed. With this, a higher resolution can be obtained as compared with the "case without pixel shift arrangement" as shown in FIG. 11A.

The following describes a configuration of a prism unit.

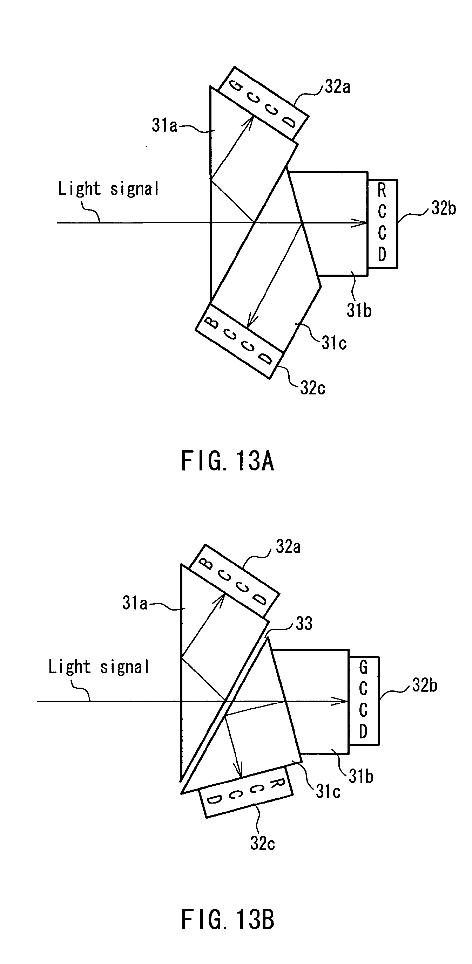

FIG. 13A is a schematic view illustrating a gapless prism unit, and FIG. 13B is a schematic view illustrating a prism unit having an air gap. The gapless prism unit shown in FIG. 13A is the prism unit shown in FIG. 13B from which an air gap 33 provided between a first prism 31a and a third prism 31c is eliminated. Therefore, it has a simple structure in which the entirety of the prism unit is provided integrally, whereby the downsizing and the cost reduction can be achieved (see the patent document 1 shown below).

However, in the prism unit with the air gap 33 as shown in FIG. 13B, the R, G, and B components after the decomposition at the respective prisms are reflected 0 time or twice (an even number of times) at interfaces when passing the prisms, whereas in the gapless prism unit shown in FIG. 13A, the R and G components are reflected 0 time or twice (an even number of times) at prism interfaces, while the B component is reflected once (an odd number of times). Thus, a subject image entering the B-CCD unit 32a is a mirror image that is inverted left to right as compared with subject images entering the R-CCD unit 32c and the G-CCD unit 32b. Therefore, an image pickup device incorporating a gapless prism unit needs an operation for subjecting the B signal fed from the B-CCD unit 32a to horizontal inversion.

Next, the following describes operations of a gapless prism unit.

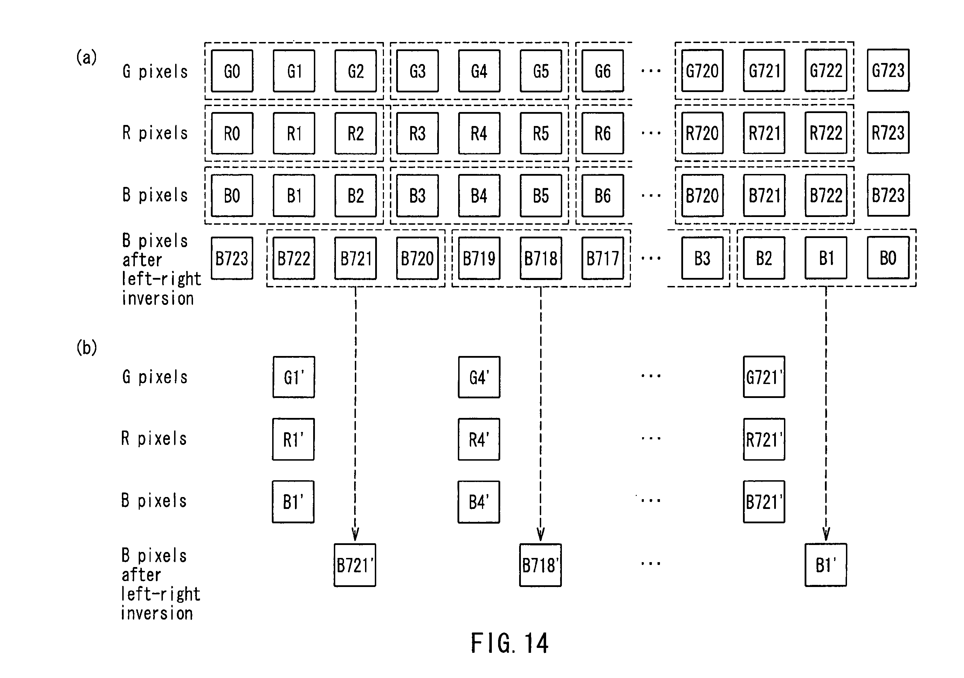

(a) of FIG. 14 is a schematic view illustrating spatial positions of pixels outputted by a R-CCD unit, a G-CCD unit, and a B-CCD unit, each of which has 724 pixels in the horizontal direction, in the case where the horizontal pixel addition is not performed. Here, to simplify the description, it is assumed that the horizontal pixel shift arrangement is not performed. Without the horizontal pixel shift arrangement, spatial positions of the R, G, and B pixels with respect to the horizontal direction coincide.

In the case where a CCD unit incorporating the gapless prism unit is used as the B-CCD unit, an image outputted by the B-CCD unit is an image inverted left to right as compared with images outputted by the R-CCD unit and the G-CCD unit. Therefore, if the images outputted are used without changes, a Y signal and a C signal outputted by a signal processing section at a subsequent stage (e.g. the digital signal processing section 96 in FIG. 9) are image signals in which only the B component is inverted, and a normal image cannot be obtained.

To cope with this, as shown in (a) of FIG. 14, the B signal is subjected to a horizontal inversion operation. More specifically, with respect to pixels R0, R1, ... R722, and R723 outputted by the R-CCD unit and pixels G0, G1, ... G722, and G723 outputted by the G-CCD unit, the order of pixels outputted by the B-CCD unit is subjected to the horizontal inversion so that the pixels are outputted in the order of B723, B722, ... B1, and B0. With this operation, a final output signal of the image pickup device is normalized.

Patent Document 1: JP 50(1975)-159618 A

Disclosure of Invention

Problem to be Solved by the Invention

However, the image pickup device configured as described above has the following problems.

First, the following describes a problem stemming from the horizontal pixel shift arrangement.

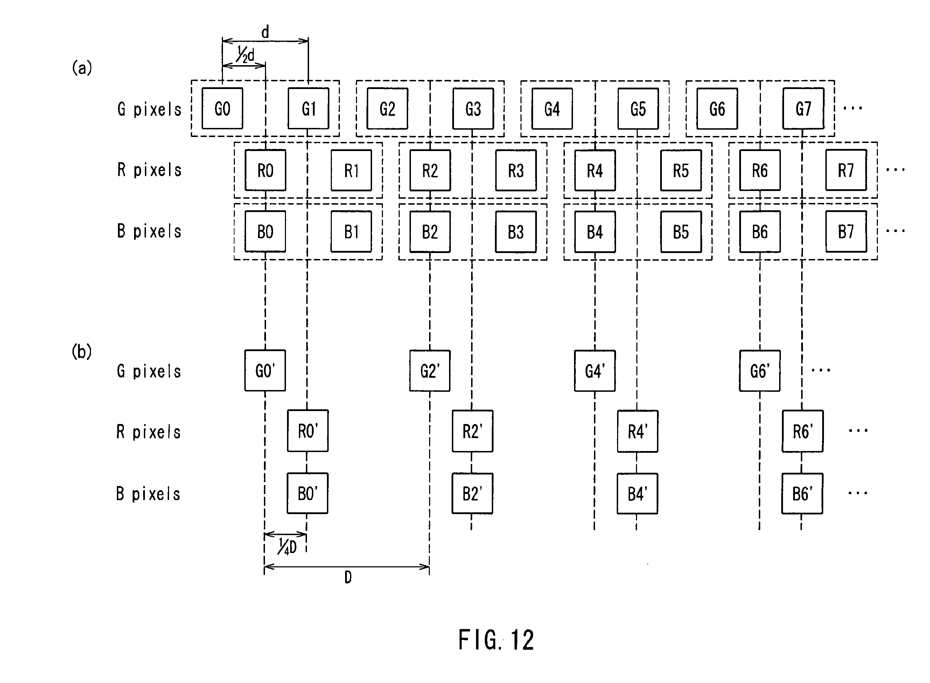

(a) of FIG. 12 is a schematic view illustrating the spatial position relationship of pixels outputted by the respective CCD units in the case where the horizontal pixel addition is not performed. In the horizontal pixel shift arrangement, the pixels G0, G1, ... outputted by the G-CCD unit are arranged with shifts, each of which is equivalent to 1/2 pixel interval (1/2d in FIG. 12) spatially with respect to the horizontal direction with respect to the pixels R01, R1, ... outputted by the R-CCD unit and the pixels B0, B1, ... outputted by the B-CCD unit. It should be noted that "d" in FIG. 12 represents one pixel interval.

On the other hand, in the case where the horizontal two-pixel addition is performed, the pixel addition is carried out in the G-CCD unit in a manner such that pixels G0 and G1 are added and pixels G2 and G3 are added as shown in (a) of FIG. 12, and pixels G0', G2', G4', ... are outputted by the CCD unit as shown in (b) of FIG. 12. Besides, since the R-CCD unit and the B-CCD unit are actuated in the same manner as the G-CCD unit, pixels R0', R2', R4', ... are outputted by the R-CCD unit, and pixels B0' G2', B4', ... are outputted by the B-CCD unit as shown in (b) of FIG. 12.

Here, as shown in (b) of FIG. 12, the spatial positions of pixels pertaining to R, G, and B after the pixel addition involve shifts, each of which is 1/2 of the pixel interval before the pixel addition, that is, 1/4 of a pixel interval after the pixel addition (1/4D in (b) of FIG. 12). Thus, the shifts of the spatial positions of the G pixels with respect to the R pixels and the B pixels are not 1/2 pixel interval each. In this state, it is impossible to achieve the resolution improvement effect by eliminating the aliasing distortion. Besides, since the pixel addition causes the number of pixels in the horizontal direction to decrease to half, the resolution in the horizontal direction considerably deteriorates upon the pixel addition. This occurs in the same manner even if the number of pixels to be subjected to the horizontal pixel addition is changed.

Next, the following describes a problem stemming from the incorporation of a gapless prism unit.

(b) of FIG. 14 is a schematic view illustrating spatial positions of pixels outputted by the R-CCD unit, the G-CCD unit, and the B-CCD unit in the case where the horizontal three-pixel addition is performed. Here, to simplify the description, it is assumed that the horizontal pixel shift arrangement is not performed. Without the horizontal pixel shift arrangement, respective spatial positions of the pixels pertaining to R, G, and B with respect to the horizontal direction coincide.

As shown in (b) of FIG. 14, in the case where the horizontal pixel addition is performed, a defective image is obtained even if it is subjected to a horizontal inversion operation. More specifically, in the case where the horizontal three-pixel addition is performed as shown in (b) of FIG. 14, in the G-CCD unit, pixels G0 and G1 and G2 are added and pixels G3 and G4 and G5 are added, and pixels G1', G4', ... G721' are outputted, respectively. Likewise, from the R-CCD unit and the B-CCD unit, pixels R1', R4', ... R721' and pixels B1', B4', ... B721' are outputted, respectively. The outputs from the B-CCD unit are subjected to the horizontal inversion operation, and pixels B721', B718', ... B1' are outputted in the stated order.

Here, as shown in (b) of FIG. 14, the B pixel corresponding to spatial positions of the pixels Gland R1 before the pixel addition is the pixel B722, while the corresponding B pixel after the pixel addition is the pixel B721' whose spatial position is displaced. Since this occurs with the other pixels in the same manner, the spatial positions of the B pixels after the pixel addition and the horizontal inversion operation are displaced with respect to the spatial positions of the R pixels and those of the G pixels. Therefore, in the final output signal of the image pickup device, only the B pixel component is shifted in the horizontal direction, which causes color drift in an image signal.

It is an object of the present invention to solve the above-described problems, and to provide an image pickup device with which the resolution deterioration is reduced and an image without color drift with high sensitivity is obtained.

Means for Solving Problem

In order to achieve the above-described object, an image pickup device of the first configuration includes: a prism unit that is composed of a plurality of prisms cemented without gap and that decomposes an incident light signal into three components of primary colors of R, G, and B; an image pickup section composed of first to third image pickup elements that independently subject the components of R, G, and B obtained by decomposition by the prism unit to photoelectric conversion, thereby outputting first to third image signals, respectively, the first to third image pickup elements being arranged so that a shift amount Wh of the first image pickup element with respect to the other image pickup elements satisfies the relationship expressed as:

$$Wh = (1+a)Ph/2 \qquad (a = \text{constant})$$

where Ph represents a pixel arrangement interval in a horizontal direction in the image pickup elements; sample-and-hold sections for performing sample-and-hold operations with respect to pixel signals outputted by the image pickup section, respectively; an automatic gain control section for controlling a gain so that a signal level of each of the pixel signals outputted by the sample-and-hold sections is kept constant; and a signal processing section for generating luminance signals and chrominance difference signals according to the pixel signals outputted by the automatic gain control section, wherein the image pickup device further comprises: a horizontal inversion section subjecting at least the third pixel signal among the pixel signals outputted by the automatic gain control section to horizontal inversion, and feeding the third pixel signal to the signal processing section; and a CCD actuation control section for controlling actions of the first to third image pickup elements independently, the CCD actuation control section being capable of controlling the first to third image pickup elements so that pixels, 2n+1 (n=0, 1, 2, ...) in each set, in a horizontal direction are subjected to pixel addition set by set, wherein the CCD actuation control sections control the pixel addition so that with respect to the first pixel signal, the pixel addition is performed so that each set includes 2n+1 pixels shifted by n pixels as compared with a corresponding set of pixels of the second pixel signal, and with respect to the third pixel signal, the pixel addition is performed so that sets of pixels are formed with a remainder obtained by dividing the number of effective pixels of the image pickup element by 2n+1 being taken into consideration.

Further, an image pickup device of the second configuration includes: a prism unit that is composed of a plurality of prisms cemented without gap and that decomposes an incident light signal into three components of primary colors of R, G, and B; an image pickup section composed of first to third image pickup elements that independently subject the components of R, G, and B obtained by decomposition by the prism unit to photoelectric conversion, thereby outputting first to third image signals, respectively, the first to third image pickup elements being arranged so that a shift amount Wh of the first image pickup element with respect to the other image pickup elements satisfies the relationship expressed as:

$$Wh = (1+a)Ph/2 \qquad (a = \text{constant})$$

where Ph represents a pixel arrangement interval in a horizontal direction in the image pickup elements; a plurality of sample-and-hold sections for performing sample-and-hold operations with respect to pixel signals outputted by the image pickup section, respectively; an automatic gain control section for controlling a gain so that a signal level of each of the pixel signals outputted by the sample-and-hold sections is kept constant; and a signal processing section for generating luminance signals and chrominance difference signals according to the pixel signals outputted by the automatic gain control section, wherein the image pickup device further comprises: an average level calculation section for calculating an average level of the luminance signals according to the pixel signals outputted by the automatic gain amplification sections; a CCD actuation control section capable of controlling the formation of sets of pixels to be added in the horizontal direction regarding each of the plurality of image pickup elements independently, a CDS control section capable of controlling each of the plurality of sample-and-hold sections independently; and a system control section for changing, in an interlocked manner, the sets of pixels to be added, which are determined by the CCD actuation control section, and sampling points at which the plurality of sample-and-hold sections perform sampling actions, wherein the system control section controls the CCD actuation control section and the CDS control section so that the pixel addition is not performed in the case where the average value calculated by the average level calculation section is not less than a predetermined value, while the pixel addition is performed in the case where the average value is less than the predetermined value.

Effects of the Invention

With the device of the above-described configuration, an image with a high sensitivity can be obtained with the resolution impairment being suppressed. Further, even if a gapless prism unit is installed, an image without color drift can be obtained and the downsizing and the cost reduction can be achieved.

Brief Description of Drawings

[FIG. 1] FIG. 1 is a block diagram illustrating a configuration of an image pickup device according to Embodiment 1 of the present invention.
[FIG. 2] FIG. 2 is a schematic view illustrating a configuration of a CCD unit according to Embodiment 1.
[FIG.3] FIG. 3 is a timing chart showing a CCD actuation action and a CDS section controlling action in the case where the horizontal pixel addition is not performed in Embodiment 1.
[FIG. 4] FIG. 4 is a timing chart showing a CCD actuation action and a CDS section controlling action in the case where the horizontal pixel addition is performed in Embodiment 1.
[FIG. 5] FIG. 5 schematically illustrates the spatial position relationship of pixel signals outputted by the CCD units in Embodiment 1.
[FIG. 6] FIG. 6 schematically illustrates the spatial position relationship of pixel signals outputted by the CCD units in Embodiment 1.
[FIG. 7] FIG. 7 is a block diagram illustrating a configuration of an image pickup device according to Embodiment 2.
[FIG. 8] FIG. 8 shows characteristic curves showing the gain for multiplication by the AGC section, the output of the average level calculation section, and the number of pixels subjected to the horizontal addition determined by the system control section, with respect to the luminance decrease in Embodiment 2.
[FIG. 9] FIG. 9 is a block diagram illustrating a configuration of a conventional image pickup device.
[FIG. 10] FIG. 10 shows timing charts showing CCD actuation actions in the conventional image pickup device.
[FIG. 11] FIG. 11 shows explanatory views illustrating a concept of the horizontal pixel shift arrangement in the conventional image pickup device.
[FIG. 12] FIG. 12 schematically illustrates the spatial position relationship of pixels outputted by the R-CCD unit, the G-CCD unit, and the B-CCD unit used in the conventional image pickup device with the horizontal pixel shift arrangement.
[FIG. 13] FIG. 13 shows explanatory views illustrating a prism configuration including a gapless prism, and a prism configuration with an air gap.
[FIG. 14] FIG. 14 schematically illustrates the spatial position relationship of pixels outputted by the R-CCD unit, the G-CCD unit, and the B-CCD unit used in the conventional image pickup device provided with a gapless prism.

Description of Reference Numerals

1    prism
2    CCD
3    CDS section
4    AGC section
5    A/D converter
6    horizontal inversion section
7    digital signal processing section
8    CCD actuation section
9    CCD actuation control section
10   CDS control section
11   horizontal inversion control section
12   system control section

Description of the Invention

The image pickup device of the first configuration of the present invention may be configured so that the CCD actuation control section is capable of controlling the formation of sets of pixels to be added in the horizontal direction regarding each of the plurality of image pickup elements independently, and the image pickup device further includes: a CDS control section capable of controlling each of the plurality of sample-and-hold sections independently; and a system control section for changing, in an interlocked manner, the sets of pixels to be added, which are determined by the CCD actuation control section, and sampling points at which the plurality of sample-and-hold sections perform sampling actions.

The CCD actuation control section may be configured so as to control the pixel addition so that the third pixel signal is subjected to the pixel addition at timings delayed by n pixels with respect to timings for the second pixel signal, and the first pixel signal is subjected to the pixel addition at timings delayed by n pixels with respect to the timings for the third pixel signal.

The image pickup device of the second configuration of the present invention may be configured so that the plurality of image pickup elements have a configuration such that pixels, 2n+1 (n=0, 1, 2, ...) in each set, in a horizontal direction are subjected to pixel addition set by set, and in the case where the average value calculated by the average level calculation section is not less than the predetermined value, n is set so as to satisfy n=0, and in the case where the average value is less than the predetermined value, n is set so as to satisfy n≥1.

(Embodiment 1)

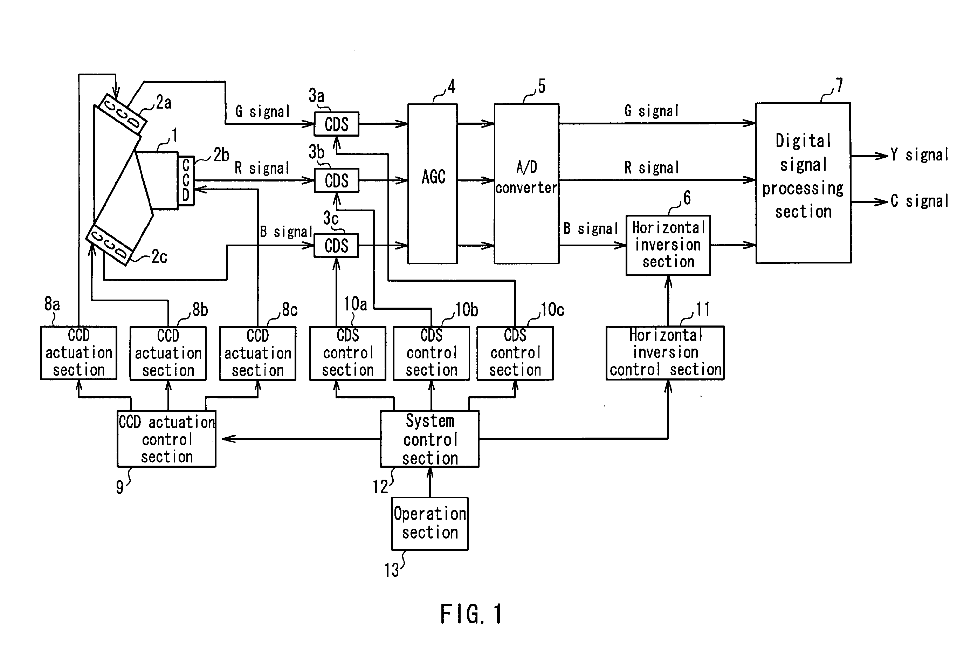

FIG. 1 is a block diagram illustrating an example of a basic configuration with principal constituent parts of an image pickup device according to Embodiment 1 of the present invention.

In FIG. 1, a prism 1 is composed of a gapless prism unit obtained by cementing a plurality of prisms without a gap so as to decompose an incident subject image into components of three primary colors of R, G, and B. Light signals obtained by the decomposition by the prism 1 are referred to as G signal, R signal, and B signal.

CCD image sensors (hereinafter referred to as CCD units) 2a to 2c convert the R, G, and B signals obtained by the decomposition into the colors of R, G, and B by the prism 1 into electric signals. It should be noted that a B-CCD unit 2a is a CCD unit for photoelectric conversion of the B signal, a G-CCD unit 2b is a CCD unit for photoelectric conversion of the G signal, and a R-CCD unit 2c is a CCD unit for photoelectric conversion of the R signal. The R-CCD unit 2b and the B-CCD unit 2c are arranged with a shift with respect to the G-CCD unit 2a spatially, the shift being equivalent to 1/2 pixel with respect to the horizontal direction (hereinafter this arrangement is referred to as "horizontal pixel shift arrangement").

CDS sections 3a to 3c perform sample-and-hold actions with respect to output signals of the CCD units 2a to 2c, thereby reducing noise in image signals. An AGC section 4 performs gain control with respect to R, G, and B signals fed from the CDS sections 3a to 3c so as to keep certain constant signal levels. An A/D converter 5 converts analog R, G, and B signals fed from the AGC section 4 into digital R, G, and B signals. A horizontal inversion section 6 performs a horizontal inversion operation with respect to the B signal fed from the A/D converter 5. Specific operations of the specific horizontal inversion operation will be described later. A digital signal processing section 7 performs a digital signal processing operation with respect to the G signal and the R signal fed from the A/D converter 5, and the B signal fed from the horizontal inversion section 6, thereby generating and outputting a Y signal (luminance signal) and a C signal (chrominance difference signal).

CCD actuation sections 8a to 8c actuate the CCD units 2a to 2c, respectively. A CCD actuation control section 9 controls the CCD actuation sections 8a to 8c so that a pixel addition operation or the like is performed. CDS control sections 10a to 10c control timings of sampling operations by the CDS sections 3a to 3c, respectively. A horizontal inversion control section 11 controls a range of pixels to be subjected to an inversion operation by the horizontal inversion section 6. A system control section 12 controls actions of the CCD actuation control section 9, the CDS control sections 10a to 10c, and the horizontal inversion control section 11 according to an operation input by an operation section 13 that will be described later. Changes to the contents of control by the system control section 12 are made in an interlocked manner with respect to the respective sections. The operation section 13 is operated by a user, whereby setting operations of various settings, picture taking operations, etc. in the image pickup device can be performed. In the present embodiment, at least either a normal shooting mode in which an image is picked up without the pixel addition or a high-sensitivity shooting mode in which an image is picked up by carrying out the pixel addition can be selected.

The following describes actions of the image pickup device.

As shown in FIG. 1, reflection light from a subject, which enters the prism 1, is decomposed into R, G, and B components of three primary colors. Light signals obtained by the decomposition are caused to enter the CCD units 2a to 2c. Here, since the prism 1 is composed of a gapless prism unit as shown in FIG. 13A, a mirror image (image inverted left to right) as compared with a subject image entering the G-CCD unit 32a and the R-CCD unit 32b enters the B-CCD unit 32c. This is because, explaining by referring to FIG. 13A, light signals entering the G-CCD unit 32a and the R-CCD unit 32b are reflected 0 time or an even number of times in the prisms 31a and 32b, respectively, while a light signal entering the B-CCD unit 32c is reflected an odd number of times in the prism 31c.

Next, the CCD units 2a to 2c convert incident light signals representing subject images into analog electric signals and output a G signal, a R signal, and a B signal (hereinafter generally referred to as RGB signals), respectively.

The RGB signals outputted by the CCD units 2a to 2c are fed to the CDS sections 3a to 3c. The CDS sections 3a to 3c perform sample-and-hold actions with respect to the reset portions and the data portions of the RGB signals fed thereto, and calculate differentials thereof, thereby reducing reset noises in the RGB signals. The timings for the sampling actions of the CDS sections 3a to 3c are controlled by sampling pulses fed from the CDS control sections 10a to 10c, respectively.

The RGB signals outputted by the CDS sections 3a to 3c are amplified by the AGC section 4 to certain constant signal levels. The RGB signals fed from the AGC section 4 are converted into digital signals by the A/D converter 5. The G signal and the R signal outputted by the A/D converter 5 are fed to the digital signal processing section 7, while the B signal is fed to the horizontal inversion section 6.

Since an image signal according to the B signal is inverted left to right as compared with image signals based on the R signal and the G signal as described above, the B signal is subjected to the inversion operation by the horizontal inversion section 6 so that a normal image like an original image should be obtained before being fed to the digital signal processing section 6. It should be noted that a range of an image signal to be subjected to an inversion action in the horizontal inversion section 6 is controlled by the horizontal inversion control section 11.

The digital signal processing section 7 generates a Y signal (luminance signal) and a C signal (chrominance difference signal) according to the respective digital signals of the RGB signals fed thereto, and outputs the same.

The following describes the configuration of the CCD unit.

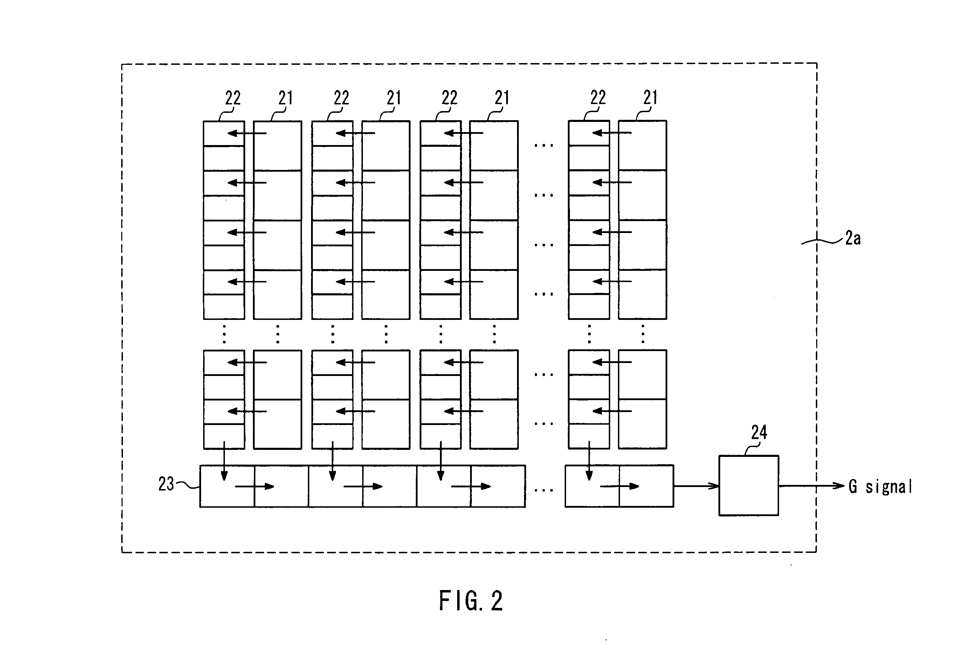

FIG. 2 is a schematic view illustrating an internal structure of the CCD unit, by referring to the G-CCD unit 2a as an example. It should be noted that the G-CCD unit 2a is, for example, configured to have 726 effective pixels in the horizontal direction.

In FIG. 2, light-receiving portions 21, composed of light-receiving elements such as photo-diodes, receive light incident thereon and generate charges. The light-receiving portions 21 are formed with several hundreds of thousands to several millions of light-receiving elements arranged in a matrix. Vertical transfer portions 22 are intended to transfer charges fed from the light-receiving portions 21 in a vertical direction, and are formed with vertical transfer CCDs in the same number as the light-receiving portions 21 or a multiple of the number of the same. Horizontal transfer portions 23 are intended to transfer, in the horizontal direction, the charges that have been transferred by the vertical transfer portions 22, and are formed with horizontal transfer CCDs. A charge detection amplification portion 24 detects the charges transferred by the horizontal transfer portions 23, amplifies the same, and outputs an electric signal. During a pixel addition action, the charge detection amplification portion 24 accumulates charges fed thereto. It should be noted that actions of the vertical transfer portion 22, the horizontal transfer portion 23, and the charge detection amplification portion 24 are controlled according to pulses outputted by the CCD actuation control sections 8a to 8c shown in FIG. 1, respectively.

In FIG. 2, incident light is received by the light-receiving portions 21, and charges are generated and stored therein during a predetermined period of time. The charge storage time herein is controlled by the CCD actuation sections 8a to 8c shown in FIG. 1.

The charges stored in the light-receiving portions 21 are transferred in the vertical direction in the vertical transfer portions 22. The charges thus transferred in the vertical direction are transferred in the horizontal direction in the horizontal transfer portions 23. The charges transferred in the horizontal direction by the horizontal transfer portions 23 are detected by the charge detection amplification section 24 and amplified by the same, whereby an electric signal (G signal) is outputted.

Though not shown, the R-CCD unit 2b and the B-CCD unit 2c also operate in the same manner as described above.

The following describes an operation during a normal picture taking operation.

It should be noted that the following description brings operations in the CCD units 2a to 2c into focus. The "normal picture taking" is assumed to be a case in which a sufficient light amount is available in the picture taking environment such as outdoor picture taking during the daytime. Regarding an operation in such a case, picture taking is carried out without a pixel addition operation in the CCD units 2a to 2c.

In FIG. 1, a user inputs an instruction for carrying out the normal picture taking by operating the operation section 13. The operation of the operation section 13 causes the system control section 12 to control the CCD actuation control section 9 so that the CCD units 2a to 2c perform normal actuation (actuation without the pixel addition). The CCD actuation control section 9 controls the CCD actuation sections 8a to 8c so that the respective CCD actuation sections 8a to 8c perform the normal CCD actuation operation. This causes the CCD units 2a to 2c to output electric signals (pixel signals) respectively corresponding to the pixels.

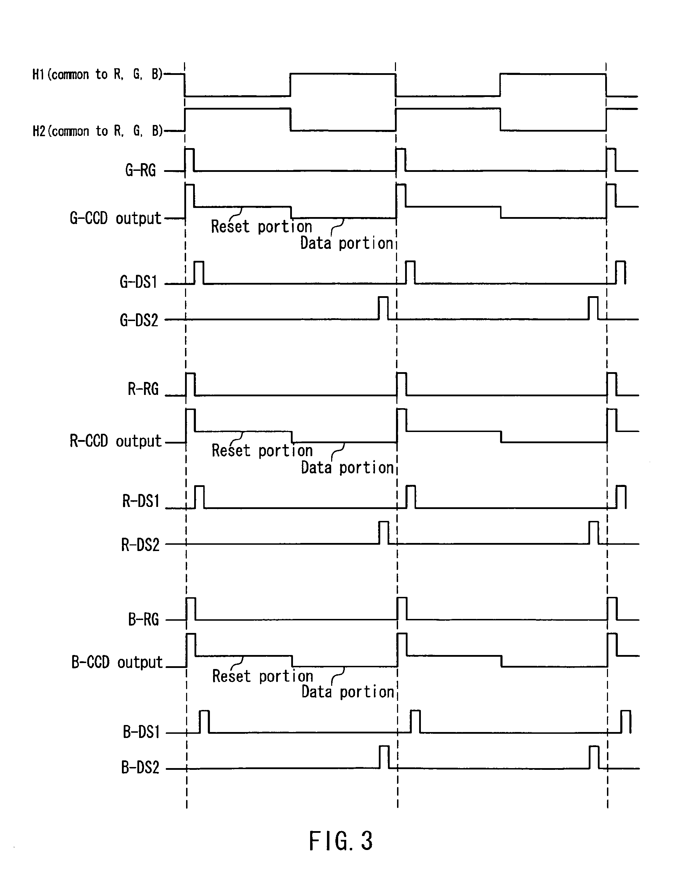

FIG. 3 is a timing chart showing a CCD actuation action and an action for controlling the CDS sections 3a to 3c during the normal actuation (without the pixel addition) of the CCD units 2a to 2c. In FIG. 3, actuation pulses H1 and H2 are pulses for actuation and control of the horizontal transfer sections 23 (see FIG. 2) in the CCD units 2a to 2c. A reset pulse RG is a pulse for resetting charges accumulated in the charge detection amplification sections 24 (see FIG. 2) in the CCD units 2a to 2c, and are fed from the CCD actuation sections 8a to 8c. Sampling pulses DS1 and DS2 are pulses for sampling actions carried out by the CDS sections 3a to 3c with respect to outputs of the CCD units 2a to 2c. The sampling pulses DS1 are outputted for a sampling action with respect to the reset portion of the CCD output, and the sampling pulses DS2 are outputted for a sampling action with respect to the data portion of the CCD output. The sampling pulses DS1 and DS2 are outputted from each of the CDS control sections 10a to 10c.

As shown in FIG. 3, upon the normal shooting, a controlling action is performed so that the cycle of the actuation pulses H1 and H2 of the horizontal transfer section 23 (see FIG. 2) and the cycle of the reset pulse RG coincide with each other, while all of the reset pulses R-RG, G-RG, and B-RG have the same phases. With such controlling actions by the CCD actuation control section 9 with respect to the CCD actuation sections 8a to 8c according to these actuation pulses and reset pulses, RGB signals such that pixels in the horizontal direction have not been subjected to the pixel addition are outputted by the CCD units 2a to 2c at the same timings.

Besides, as shown in FIG. 3, the system control section 12 performs a controlling action such that the timings of sampling actions by the CDS control sections 10a to 10c coincide with the timings of the reset portions and the data portions in the output signals of the CCD units 2a to 2c. In other words, since all of the reset portions and the data portions of the signals outputted from the G-CCD unit 2a, the R-CCD unit 2b, and the B-CCD unit 2c have the same timings, the G-DS1, G-DS2, R-DS1, R-DS2, B-DS1, and B-DS2 pulses outputted by the CDS control sections 10a to 10c are controlled so that all of these have the same phase. By so doing, the reset noise in the pixel signals outputted from the CCD units 2a to 2c can be removed.

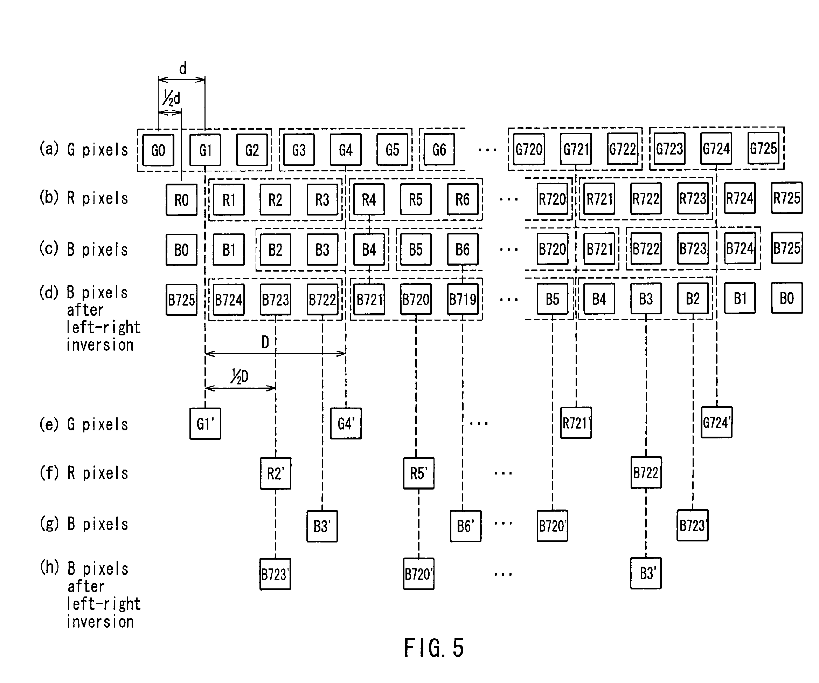

(a) to (d) of FIG. 5 schematically illustrate spatial positions of the pixels outputted by the CCD units 2a to 2c upon the normal shooting. Since the horizontal pixel addition operation is not performed upon the normal shooting, the spatial positions of the G pixels G0, G1, ... , G725 are shifted by 1/2 pixel interval with respect to the spatial positions of the R pixels R0, R1, ..., R725, respectively, as shown in (a) of FIG. 5. It should be noted that "d" represents one pixel interval, "1/2 d" represents a half of the pixel interval, indicating the shift amount between the G pixels and the R pixels.

Further, since the image pickup device according to the present embodiment incorporates the gapless prism unit, an image formed according to the B signal outputted by the B-CCD unit 2c is inverted left to right as compared with images formed according to the G signal and the R signal outputted by the G-CCD unit 2a and he R-CCD unit 2b. Therefore, the B signal fed from the A/D converter 5 are subjected to a horizontal inversion operation by the horizontal inversion section 6. More specifically, all of the effective pixels B0 B1, ..., B725 as the B pixels shown in (c) of FIG. 5 are subjected to a horizontal inversion operation, whereby the pixel signals B725, B724, ..., B0 are outputted from the horizontal inversion section 6 in the stated order as shown in (d) of FIG. 5. It should be noted that the range of pixels to be inverted by the horizontal inversion section 6 is designated by the horizontal inversion control section 11.

Further, since the R signal and the G signal outputted by the A/D converter 5 are fed to the digital signal processing section 7 without any change, the G signal shown in (a) of FIG. 5, the R signal shown in (b) of FIG. 5, and the B signal shown in (d) of FIG. 5 are fed to the digital signal processing section 7. Therefore, the spatial positions of the R pixels shown in (b) of FIG. 5 coincide with the spatial positions of the B pixels after being subjected to the horizontal inversion as shown in (d) of FIG. 5, and further, the G pixels shown in (a) of FIG. 5 are shifted by 1/2 pixel interval with respect to the R pixels and the B pixels.

Therefore, a signal that does not have color drift caused by displacements of the spatial positions of the B signal and that has high resolution because of the horizontal pixel shift arrangement is outputted by the digital signal processing section 7 as the final output member of the image pickup device.

Next, the following describes an operation for the high-sensitivity shooting.

In FIG. 1, in the case where the luminance in the picture taking environment is low, like in the case of outdoor picture taking at nighttime, the mode of the image pickup device can be shifted to the high-sensitivity shooting mode by the user operating the operation section 13. When the mode is shifted to the high-sensitivity shooting mode, the system control section 12 controls the respective sections so that a pixel addition operation is carried out. The system control section 12 controls the CCD actuation control section 9 so that three pixels in the horizontal direction are added.

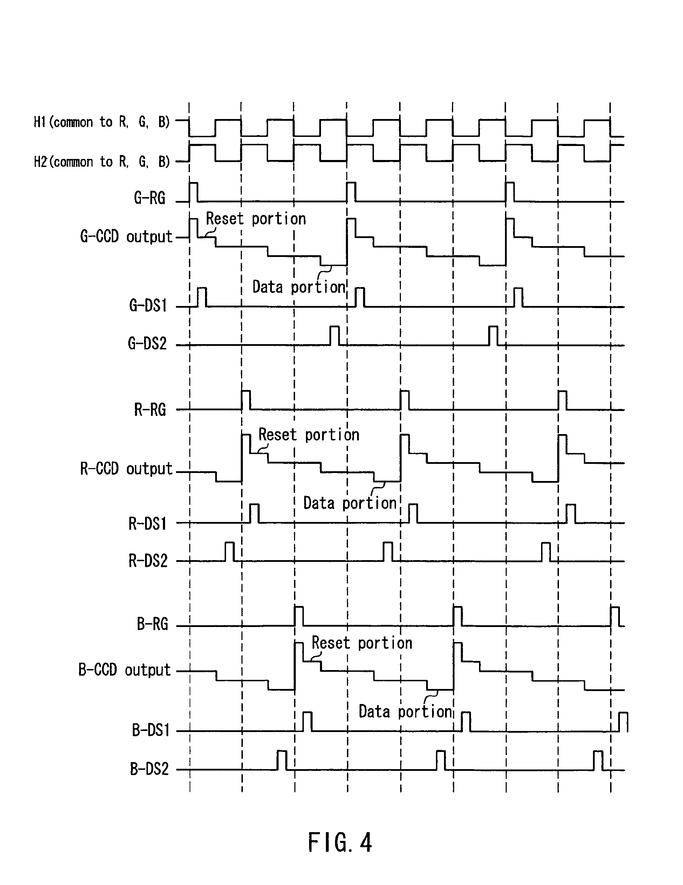

Next, the following describes a pixel addition operation for the high-sensitivity shooting. FIG. 4 is a timing chart showing the CCD actuation action and the action of controlling the CDS sections 3a to 3c when three pixels in the horizontal direction in each of the CCD units 2a to 2c are added. Detailed descriptions of the pulses are omitted herein since such descriptions are made in the above with reference to FIG. 3.

As shown in FIG. 4, the CCD actuation control section 9 changes the cycles of the respective reset pulses RG outputted by the CCD actuation sections 8a to 8c. More specifically, for the addition of three pixels, the cycles of the RG pulses are set to be three times the cycle of the H1 pulse and the H2 pulse. Next, the phase of the R-RG pulse is delayed by one cycle of the H1 or H2 pulse with respect to the phase of the G-RG pulse. Further, the phase of the B-RG pulse is delayed by one cycle of the H1 or H2 pulse with respect to the phase of the R-RG pulse.

As described above, with the actuation of the CCD units 2a to 2c according to pulses set by the CCD driving control section 9, signal charges corresponding to three consecutive pixels outputted by the horizontal transfer section 23 of each CCD unit shown in FIG. 2 are not reset but accumulated in the charge detection amplification section 24. Therefore, as shown in the data portion of FIG. 4, a signal is obtained having an amplitude level that is three times the amplitude level of the normal shooting (FIG. 3). In other words, a high-sensitivity image signal can be obtained.

Further, as shown in FIG. 4, since the phases of the respective RG pulses are shifted from each other, the reset portions and the data portions of the signals outputted by the CCD units 2a to 2c consequently are shifted by one cycle of the H1 and H2 pulses. Therefore, the system control section 12 controls the phases of the DS1 and DS2 pulses outputted by each of the CDS control sections 3a to 3c so that these phase coincide with the data portions and the reset portions. More specifically, the R-DS1 and R-DS2 pulses are delayed by one cycle of the H1 and H2 pulses as compared with the G-DS1 and G-DS2 pulses, while the B-DS1 and B-DS2 pulses are delayed by one cycle of the H1 and H2 pulses as compared with the R-DS1 and R-DS2 pulses. According to the DS1 and DS2 pulses thus set, operations of the CDS sections 3a to 3c are controlled, whereby the CDS sections 3a to 3c are allowed to perform a sample-and-hold action with respect to pixel signals having been subjected to the pixel addition.

(e) to (h) of FIG. 5 schematically illustrate spatial positions of pixels outputted by the CCD units 2a to 2c upon the horizontal three-pixel addition operation. In the G-CCD unit 2a, the pixels G0, G1, and G2 shown in (a) of FIG. 5 are added, the pixels G3, G4, and G5 are added, and likewise, such pixel addition is performed with respect to the subsequent pixels until the pixels G723, G724, and G725 are added. After the addition, as shown in (e) of FIG. 5, pixels G1', G4', ..., G724' are outputted.

Further, since in the R-CCD unit 2b the phase of the R-RG pulse is delayed by one cycle of the H1 and H2 pulses, that is, by one pixel, as compared with the phase of the G-RG pulse as shown in FIG. 4, the sets of pixels subjected to the pixel addition in the R-CCD unit 2b is different from the sets of pixels in the G-CCD unit 2a. More specifically, in the R-CCD unit 2b, as shown in (b) of FIG. 5, the pixels R1, R2, and R3 are added, the pixels R4, R5, and R6 are added, and likewise, such pixel addition is performed with respect to the subsequent pixels until the pixels R721, R722, and R723 are added. After the addition, as shown in (f) of FIG. 5, pixels R2', R5', ..., and R722' are outputted.

Still further, in the B-CCD unit 2c the phase of the B-RG pulse is delayed by one pixel as compared with the phase of the R-RG pulse as shown in FIG. 4. Therefore, as shown in (c) of FIG. 5, the pixels B2, B3, and B4 are added, the pixels B5, B6, and B7 are added, and likewise, such pixel addition is performed with respect to the subsequent pixels until the pixels B722, B723, and B724 are added. After the addition, as shown in (g) of FIG. 5, pixels B3', B6', ..., and B723' are outputted.

In each case, since the horizontal three-pixel addition is performed, the spatial positions of the pixels after the addition coincide with the spatial positions of the pixels at the center in the three pixels in each set before the addition.

Next, the B signal (see (g) of FIG. 5) outputted by the B-CCD unit 2c is fed to the A/D converter 5 and then is subjected to the horizontal inversion operation by the horizontal inversion section 6. The horizontal inversion section 6 performs the inversion operation with respect to the 241 pixels B3', B6', ..., B723' shown in (g) of FIG. 5. It should be noted that operations of the horizontal inversion section 6 are controlled by the horizontal inversion control section 11. The horizontal inversion section 6 inverts the inputted pixels B3', B6', ... and B723', so that pixel signals corresponding to the pixels B723', B720, ... and B3' are outputted in the stated order as shown in (h) of FIG. 5.

Next, the following describes the spatial position relationship of the R, G, and B pixels upon the pixel addition.

First, regarding the R pixel and the B pixel, before the pixel addition, as shown in (b) and (d) of FIG. 5, the B pixel corresponding to the spatial position of the pixel R2 is the B pixel B723, and the B pixel corresponding to the pixel R5 is the pixel B720. On the other hand, after the pixel addition, as shown in (f) and (h) of FIG. 5, the B pixel corresponding to the pixel R2' is the pixel B723', and the B pixel corresponding to the pixel R'5 is the pixel B720'. In other words, the spatial positions of the pixels before the pixel addition and after the pixel addition coincide with each other. It should be noted that this applies to the others of the R pixels and the B pixels.

Further, the relative spatial positions of the G pixels are shifted by 1/2 pixel interval after pixel addition with respect to the R pixels, as shown in (e) and (f) of FIG. 5. In other words, even after the addition, the horizontal pixel shift arrangement is maintained.

As described above, the number of pixels of an output signal of the digital signal processing section 7 as a final output of the image pickup device decreases to 1/3 after the horizontal three-pixel addition, but the signal level as a final output increases three times. Further, by the effect of the horizontal pixel shift arrangement, the resolution impairment is suppressed. Still further, color drift due to the spatial position displacement of the B pixels does not occur at all. Therefore, the image quality during the high-sensitivity shooting can be improved.

Further, because of the use of a gapless prism, effects of downsizing and cost reduction can be achieved.

It should be noted that though the horizontal three-pixel addition is performed in Embodiment 1, the number of pixels to be added is not limited to three. The pixel addition may be performed in any manner as long as 2n+1 (n=1, 2, ...) pixels are added. As long as the configuration is such that 2n+1 pixels are added, the horizontal pixel shift arrangement is maintained even after the pixel addition, and the spatial position displacement of the B pixels after the horizontal inversion can be prevented.

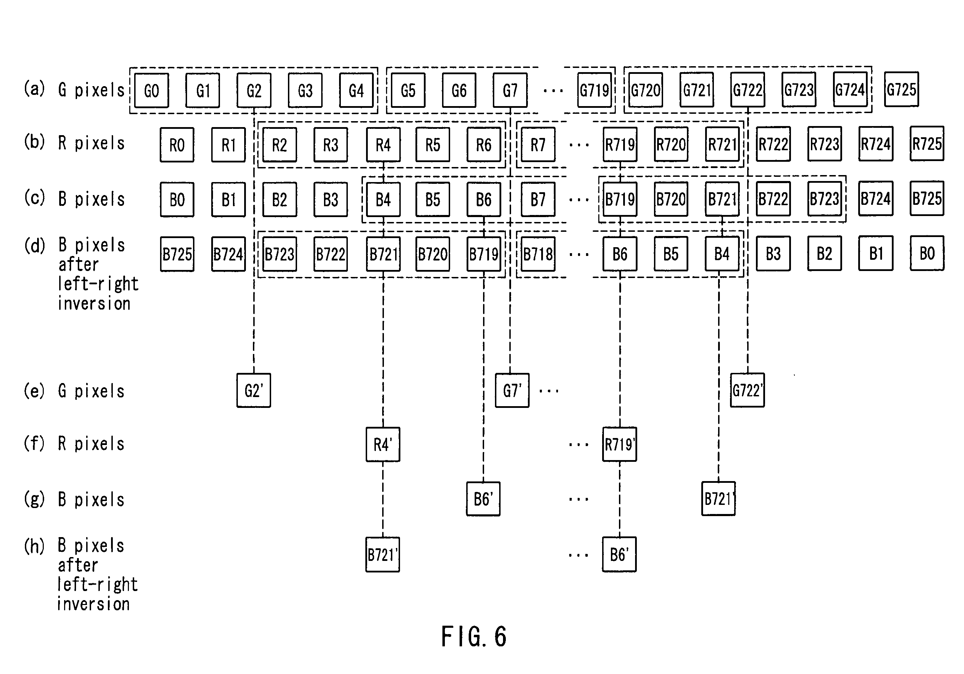

For example, FIG. 6 is a schematic view illustrating the spatial positions of pixels outputted by the CCD units 2a to 2c before and after the horizontal five-pixel addition. In this case, a controlling operation is performed so that the sets of pixels to be added are a set of pixels G0 to G4 in the case of the G pixels as shown in (a) of FIG. 6, a set of pixels R2 to R6 in the case of the R pixels as shown in (b) of FIG. 6, and a set of the pixels B4 to B8 in the case of the B pixels as shown in (c) of FIG. 6. With an operation of the horizontal inversion section 6 to invert 144 pixels B6', ... B721' shown in (g) of FIG. 6, the spatial positions of the R pixels after the pixel addition (see (f) of FIG. 6) coincide with the spatial positions of the B pixels after the pixel addition and the horizontal inversion, i.e., the pixels B721', ..., B6' shown in (h) of FIG. 6. Further, the spatial positions of the G pixels shown in (e) of FIG. 6 are shifted by 1/2 pixel interval of the R pixels shown in (f) of FIG. 6 and the B pixels shown in (h) of FIG. 6. Therefore, the same effect as that of the horizontal three-pixel addition can be achieved.

It should be noted that Embodiment 1 is a case in which the CCD units 2a to 2c perform the pixel shift arrangement only in the horizontal direction, but even in the case where the pixel shift arrangement is carried out in both of the horizontal and vertical directions, the same effect can be achieved with respect to the pixel addition in the horizontal direction.

Further, though the number of the horizontal effective pixels in the CCD units 2a to 2c is 726 in Embodiment 1, the number is not limited to this. With the present invention, even in the case of a CCD unit having a different number of pixels, the same effect can be achieved by changing the sets of the B pixels according to the number of effective pixels and/or the number of pixels to be added. For example, in the case where 727 effective pixels are available and the three-pixel addition is carried out, the same effect can be achieved by changing the sets of the B pixels to sets of B0 to B2, B3 to B5, .... Further, in the case where 727 effective pixels are available and the five-pixel addition is carried out, the same effect can be achieved by changing the sets of the B pixels to sets of B0 to B4, B5 to B9, .... Still further, in the case where 725 effective pixels are available and the five-pixel addition is carried out, the same effect can be achieved by changing the sets of the B pixels to sets of B3 to B7, B8 to B12, ....

Further, though the image signal outputted by the B-CCD unit 2c is inverted left to right in Embodiment 1, the unit that outputs the image signal inverted left to right is not limited to the B-CCD unit 2c. Since the unit that outputs the image signal inverted left to right is determined according to the configuration of the prism 1, there is a possibility that an image inverted left to right would be outputted by the G-CCD unit 2a or the R-CCD unit 2b. In the case where the image signal outputted by the G-CCD unit 2a or the R-CCD unit 2b is inverted left to right, the horizontal inversion section 6 causing horizontal inversion of the G signal or the R signal may be provided at an output stage of the A/D converter 5. This makes it possible to output the Y signal and the C signal as is the case with Embodiment 1, whereby the same effect can be achieved.

(Embodiment 2)

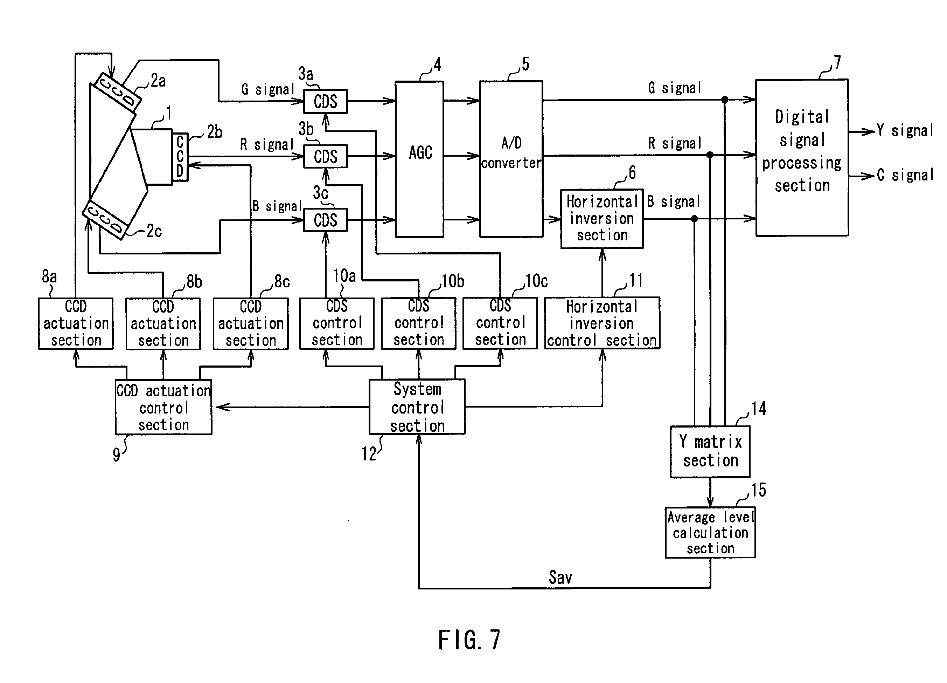

FIG. 7 is a block diagram illustrating a configuration of an image pickup device according to Embodiment 2. In FIG. 7, blocks performing the same actions as those in FIG. 1 are designated with the same reference numerals, and detailed descriptions of the blocks are omitted.

A Y matrix section 14 performs a matrix operation based on the digital RGB signals outputted by the A/D converter 5 and the horizontal inversion section 6, and generates a Y signal. An average level calculation section 15 calculates an average luminance level of a screen as a whole with respect to the signal outputted by the Y matrix section 14, and feeds the calculated average luminance level to the system control section 12.

The differences of the image pickup device according to Embodiment 2 from the image pickup device according to Embodiment 1 are that the Y matrix section 14 and the average level calculation section 15 are provided, and the action of the system control section 12. The following describes an operation, concentrating on the foregoing differences.

The Y matrix section 14 performs a matrix operation based on the R signal and the G signal outputted by the A/D converter 5 and the B signal outputted by the horizontal inversion section 6, generates a Y signal (luminance signal), and feeds the same to the average level computation section 15. The average level calculation section 15 calculates an average value Sav of luminance levels over an entirety of the screen based on the Y signal outputted by the Y matrix section 14, and feeds the value to the system control section 12. The system control section 12 observes the value of Sav, and when it is below a predetermined level Slmt, a horizontal pixel addition operation is carried out by controlling the CCD actuation control section 9, the CDS control sections 10a to 10c, and the horizontal inversion control section 11 in an interlocked manner. In other words, the normal actuation and the pixel addition actuation are switched from one to the other in an interlocked manner with brightness of surroundings of the image pickup device.

The following describes an action in the case where the luminance of an incident subject image continuously decreases.

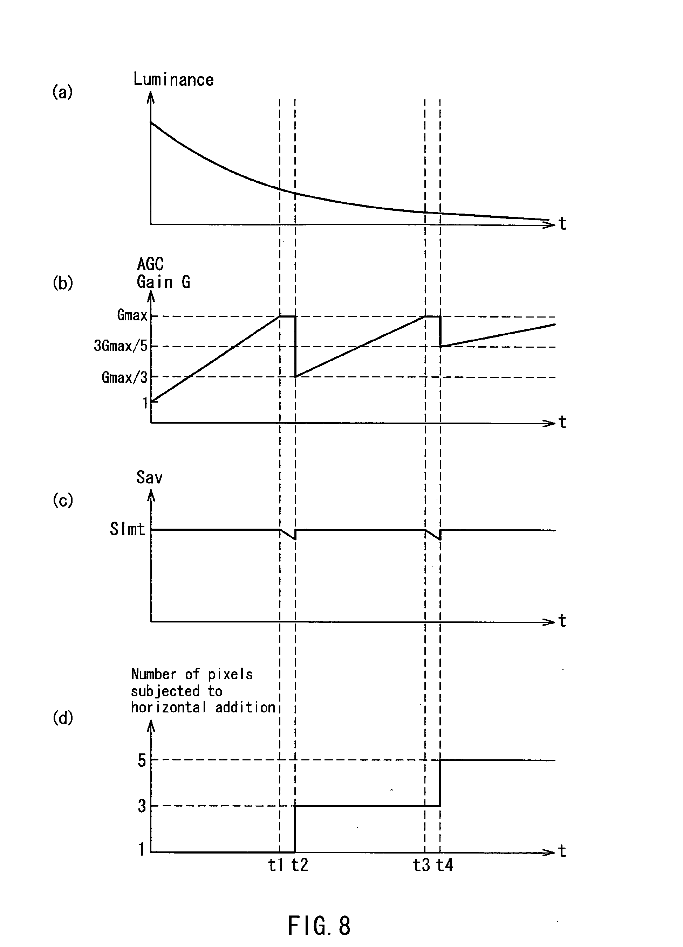

(a) of FIG. 8 is a graph showing changes of luminance of a subject image entering the prism 1. (b) of FIG. 8 is a graph showing a gain of the AGC section 4. (c) of FIG. 8 is a graph showing an average value Sav outputted by the average level calculation section 15. (d) of FIG. 8 is a graph showing changes of the number of pixels to be added in the horizontal pixel addition performed according to the control by the system control section 12. It should be noted that the horizontal axis plots time t in FIG. 8.

As shown in (a) of FIG. 8, as the luminance decreases with time, the level of a pixel signal fed to the AGC section 4 also decreases. The AGC section 4 increases a multiplication gain G in an interlocked manner with a decrease of the level of the pixel signal so that the level of the output signal is maintained to be constant ((b) of FIG. 8, time t0 to time t1). When the signal level is controlled so as to be constant by the AGC section 4, an average value Sav outputted by the average level calculation section 15 becomes constant as shown in (c) of FIG. 8, time t0 to time t1.

As shown in (b) of FIG. 8, the gain for multiplication by the AGC section 4 has an upper limit Gmax, and when the gain reaches the upper limit Gmax, a decrease of the luminance ((a) of FIG. 8, time t1 to time t2) causes the output of the AGC section 4 to decrease, not keeping a constant level. Therefore, as shown in (c) of FIG. 8, time t1 to time t2, the average value Sav outputted by the average level calculation section 14 decreases to below the level Slmt.

When the average value Sav decreases to below the level Slmt, the system control section 12 controls the image pickup element control section 9, the CDS control section 10a to 10c, and the horizontal inversion control section 11 in an interlocked manner, so that the horizontal three-pixel addition is performed, as shown in (d) of FIG. 8. The control in this case is identical to that of Embodiment 1 described above, and the detailed description is omitted herein.

By controlling the pixel addition operation, the level of the signals outputted by the CCD units 2a to 2c increases to three times the signal level before the pixel addition, and the signal level fed to the AGC section 4 also increases to three times. Therefore, the AGC gain decreases to Gmax/3 once as shown in (b) of FIG. 8, time t2, so as to keep the output signal level constant.

After the time t2, as the luminance decreases further, the multiplication gain of the AGC section 4 shown in (b) of FIG. 8 again reaches the upper limit Gmax at the tmie t3.

As shown in the period from time t2 to time t3, as the luminance decreases still further, the average value Sav outputted by the average level calculation section 15 decreases to below the level Slmt likewise. Therefore, as shown in (d) of FIG. 8, the system control section 12 performs a controlling action so that the horizontal five-pixel addition is carried out.

This causes the input signal level of the AGC section 4 to increase to 5/3 as compared with the level at the horizontal three-pixel addition. To keep the level constant, the AGC section 4 causes the gain to decrease to (3/5)xGmax once ((b) of FIG. 8, time t4).

After the time t4, as the luminance decreases still further, the gain of the AGC section 4 is controlled so as to increase so that the level is kept constant.

With the foregoing configuration, with the Y matrix section 14 and the average level calculation section 15, the horizontal pixel addition action is controlled so that the level is kept constant automatically according to the luminance level of an incident subject image. Therefore, a mode selection operation by a user for selecting the normal shooting mode or the high-sensitivity shooting mode is not required, and the operability is improved.

Further, upon the pixel addition, the horizontal pixel shift arrangement can be maintained for the G pixels, the R pixels, and the B pixels. Therefore, the resolution impairment can be suppressed, and color drift because of a spatial position displacement of the B pixels does not occur at all. Besides, since the gapless prism is used, downsizing and cost reduction can be achieved accordingly.

It should be noted that though the horizontal three-pixel or five-pixel addition is performed in Embodiment 2, the pixel addition is not limited to these. The controlling operation may be performed so that addition of 2n+1 (n=1, 2, ...) pixels is carried out. By so doing, the horizontal pixel shift arrangement can be maintained even after the pixel addition, and the spatial position displacement of the B pixels after the horizontal inversion can be prevented.

Industrial Applicability

An image pickup device according to the present invention is useful as a low-cost image pickup device incorporating a gapless prism.

**Claims**

1. An image pickup device comprising:

   a prism unit that is composed of a plurality of prisms cemented without gap and that decomposes an incident light signal into three components of primary colors of R, G, and B;
   an image pickup section composed of first to third image pickup elements that independently subject the components of R, G, and B obtained by decomposition by the prism unit to photoelectric conversion, thereby outputting first to third image signals, respectively, the first to third image pickup elements being arranged so that a shift amount Wh of the first image pickup element with respect to the other image pickup elements satisfies the relationship expressed as:

$$Wh = (1+a)Ph/2 \qquad (a = constant)$$

where Ph represents a pixel arrangement interval in a horizontal direction in the image pickup elements;
sample-and-hold sections for performing sample-and-hold operations with respect to pixel signals outputted by the image pickup section, respectively;
an automatic gain control section for controlling a gain so that a signal level of each of the pixel signals outputted by the sample-and-hold sections is kept constant; and
a signal processing section for generating luminance signals and chrominance difference signals according to the pixel signals outputted by the automatic gain control section,

wherein the image pickup device further comprises:

a horizontal inversion section subjecting at least the third pixel signal among the pixel signals outputted by the automatic gain control section to horizontal inversion, and feeding the third pixel signal to the signal processing section; and
a CCD actuation control section for controlling actions of the first to third image pickup elements independently, the CCD actuation control section being capable of controlling the first to third image pickup elements so that pixels, 2n+1 (n=0, 1, 2, ...) in each set, in a horizontal direction are subjected to the pixel addition set by set,

wherein the CCD actuation control section controls the pixel addition so that
with respect to the first pixel signal, the pixel addition is performed so that each set includes 2n+1 pixels shifted by n pixels as compared with a corresponding set of pixels of the second pixel signal, and
with respect to the third pixel signal, the pixel addition is performed so that sets of pixels are formed with a remainder obtained by dividing the number of effective pixels of the image pickup element by 2n+1 being taken into consideration.

2. The image pickup device according to claim 1, wherein
the CCD actuation control section is capable of controlling the formation of sets of pixels to be added in the horizontal direction regarding each of the plurality of image pickup elements independently,
the image pickup device further comprising:

a CDS control section capable of controlling each of the plurality of sample-and-hold sections independently; and
a system control section for changing, in an interlocked manner, the sets of pixels to be added, which are determined by the CCD actuation control section, and sampling points at which the plurality of sample-and-hold sections perform sampling actions.

3. The image pickup device according to claim 1,
wherein the CCD actuation control section controls the pixel addition so that the third pixel signal is subjected to the pixel addition at timings delayed by n pixels with respect to timings for the second pixel signal, and the first pixel signal is subjected to the pixel addition at timings delayed by n pixels with respect to the timings for the third pixel signal.

4. An image pickup device comprising:

a prism unit that is composed of a plurality of prisms cemented without gap and that decomposes an incident light signal into three components of primary colors of R, G, and B;
an image pickup section composed of first to third image pickup elements that independently subject the components of R, G, and B obtained by decomposition by the prism unit to photoelectric conversion, thereby outputting first to third image signals, respectively, the first to third image pickup elements being arranged so that a shift amount Wh of the first image pickup element with respect to the other image pickup elements satisfies the relationship expressed as:

$$Wh = (1+a)Ph/2 \qquad (a = \text{constant})$$

where Ph represents a pixel arrangement interval in a horizontal direction in the image pickup elements;
a plurality of sample-and-hold sections for performing sample-and-hold operations with respect to pixel signals outputted by the image pickup section, respectively;
an automatic gain control section for controlling a gain so that a signal level of each of the pixel signals outputted by the sample-and-hold sections is kept constant; and
a signal processing section for generating luminance signals and chrominance difference signals according to the pixel signals outputted by the automatic gain control section,
wherein the image pickup device further comprises:
an average level calculation section for calculating an average level of the luminance signals according to the pixel signals outputted by the automatic gain amplification sections;
a CCD actuation control section capable of controlling the formation of sets of pixels to be added in the horizontal direction regarding each of the plurality of image pickup elements independently,
a CDS control section capable of controlling each of the plurality of sample-and-hold sections independently; and
a system control section for changing, in an interlocked manner, the sets of pixels to be added, which are determined by the CCD actuation control section, and sampling points at which the plurality of sample-and-hold sections perform sampling actions,

wherein the system control section controls the CCD actuation control section and the CDS control section so that the pixel addition is not performed in the case where the average value calculated by the average level calculation section is not less than a predetermined value, while the pixel addition is performed in the case where the average value is less than the predetermined value.

5. The image pickup device according to claim 4,
wherein the plurality of image pickup elements have a configuration such that pixels, $2n+1$ ($n=0, 1, 2, ...$) in each set, in a horizontal direction are subjected to pixel addition set by set, and
in the case where the average value calculated by the average level calculation section is not less than the predetermined value, n is set so as to satisfy $n=0$, and in the case where the average value is less than the predetermined value, n is set so as to satisfy $n \geq 1$.

**Amended claims under Art. 19.1 PCT**

**2.** a system control section for changing, in an interlocked manner, the sets of pixels to be added, which are determined by the CCD actuation control section, and sampling points at which the plurality of sample-and-hold sections perform sampling actions.

**3.** The image pickup device according to claim 1,
wherein the CCD actuation control section controls the pixel addition so that the third pixel signal is subjected to the pixel addition at timings delayed by n pixels with respect to timings for the second pixel signal, and the first pixel signal is subjected to the pixel addition at timings delayed by n pixels with respect to the timings for the third pixel signal.

**4.** (Amended) The image pickup device according to claim 1, further comprising:

an average level calculation section for calculating an average level of the luminance signals according to the pixel signals outputted by the automatic gain amplification sections,

wherein $n=0$ when the average level calculated by the average level calculation section is not less than a predetermined value, and $n \geq 1$ when the average level is less than the predetermined value.

**5.** (Canceled)

FIG. 1

EP 1 821 549 A1

FIG. 2

EP 1 821 549 A1

FIG. 3

FIG. 4

FIG. 5

EP 1 821 549 A1

(a) G pixels | G0 | G1 | G2 | G3 | G4 | G5 | G6 | G7 | ··· | G719 | G720 | G721 | G722 | G723 | G724 | G725

(b) R pixels | R0 | R1 | R2 | R3 | R4 | R5 | R6 | R7 | ··· | R719 | R720 | R721 | R722 | R723 | R724 | R725

(c) B pixels | B0 | B1 | B2 | B3 | B4 | B5 | B6 | B7 | ··· | B719 | B720 | B721 | B722 | B723 | B724 | B725

(d) B pixels after left-right inversion | B725 | B724 | B723 | B722 | B721 | B720 | B719 | B718 | ··· | B6 | B5 | B4 | B3 | B2 | B1 | B0

(e) G pixels | G2' | G7' | ··· | G722'

(f) R pixels | R4' | ··· | R719'

(g) B pixels | B6' | ··· | B721'

(h) B pixels after left-right inversion | B721' | ··· | B6'

FIG. 6

FIG. 7

EP 1 821 549 A1

(a) Luminance

(b) AGC Gain G

Gmax

3Gmax/5

Gmax/3

1

(c) Sav

Slmt

(d) Number of pixels subjected to horizontal addition

5

3

1

t1 t2          t3 t4

FIG. 8

FIG. 9

H1

H2

RG

CCD output

Reset portion

Data portion

FIG. 10A

H1

H2

RG

CCD output

Reset portion

Data portion

FIG. 10B

Sampling point

Light signal

Light-receiving portion

G-CCD

R-CCD

B-CCD

0    1    2    3    4

## FIG. 11A

Sampling point

Light signal

Light-receiving portion

G-CCD

0    1    2    3    4    5

R-CCD

B-CCD

0    1    2    3    4

## FIG. 11B

FIG. 12

32a

31a

Light signal

R
C
C
D

32b

31b

31c

B
C
C
D

32c

FIG. 13A

32a

31a

B
C
C
D

33

Light signal

G
C
C
D

32b

31b

31c

R
C
C
D

32c

FIG. 13B

EP 1 821 549 A1

(a)

| G pixels | G0 | G1 | G2 | G3 | G4 | G5 | G6 | ··· | G720 | G721 | G722 | G723 |
|---|---|---|---|---|---|---|---|---|---|---|---|---|

| R pixels | R0 | R1 | R2 | R3 | R4 | R5 | R6 | ··· | R720 | R721 | R722 | R723 |
|---|---|---|---|---|---|---|---|---|---|---|---|---|

| B pixels | B0 | B1 | B2 | B3 | B4 | B5 | B6 | ··· | B720 | B721 | B722 | B723 |
|---|---|---|---|---|---|---|---|---|---|---|---|---|

| B pixels after left-right inversion | B723 | B722 | B721 | B720 | B719 | B718 | B717 | ··· | B3 | B2 | B1 | B0 |
|---|---|---|---|---|---|---|---|---|---|---|---|---|

(b)

| G pixels | G1' | | G4' | | ··· | | G721' | |
|---|---|---|---|---|---|---|---|---|

| R pixels | R1' | | R4' | | ··· | | R721' | |
|---|---|---|---|---|---|---|---|---|

| B pixels | B1' | | B4' | | ··· | | B721' | |
|---|---|---|---|---|---|---|---|---|

| B pixels after left-right inversion | | B721' | | B718' | ··· | | | B1' |
|---|---|---|---|---|---|---|---|---|

FIG. 14

## INTERNATIONAL SEARCH REPORT

| | International application No. |
|---|---|
| | PCT/JP2005/018751 |

A. CLASSIFICATION OF SUBJECT MATTER
*H04N9/09*(2006.01)

According to International Patent Classification (IPC) or to both national classification and IPC

B. FIELDS SEARCHED

Minimum documentation searched (classification system followed by classification symbols)
*H04N9/09*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 5-30517 A   (Nippon Hoso Kyokai,<br>Toshiba Corp.),<br>05 February, 1993 (05.02.93),<br>Full text; all drawings<br>(Family: none) | 4,5<br>1-3 |
| Y<br>A | JP 2003-319407 A  (Minolta Co., Ltd.),<br>07 November, 2003 (07.11.03),<br>Full text; all drawings<br>& US 2003/202108 A1 | 4,5<br>1-3 |
| Y<br>A | JP 2002-300499 A (Canon Inc.),<br>11 October, 2002 (11.10.02),<br>Full text; all drawings<br>(Family: none) | 4,5<br>1-3 |

| ☒   Further documents are listed in the continuation of Box C. | ☐   See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    06 January, 2006 (06.01.06) | Date of mailing of the international search report<br>    17 January, 2006 (17.01.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**EP 1 821 549 A1**

<table>
<tr><td colspan="2">**INTERNATIONAL SEARCH REPORT**</td><td>International application No.<br>PCT/JP2005/018751</td></tr>
<tr><td colspan="3">C (Continuation).　DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>Y<br>A</td><td>JP 2000-341709 A　(Victor Company Of<br>Japan, Ltd.),<br>08 December, 2000 (08.12.00),<br>Full text; all drawings<br>(Family: none)</td><td>4,5<br>1-3</td></tr>
</table>

Form PCT/ISA/210 (continuation of second sheet) (April 2005)

## INTERNATIONAL SEARCH REPORT

| International application No. |
|---|
| PCT/JP2005/018751 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

(See extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2005/018751

Continuation of Box No.III of continuation of first sheet(2)

The matter common to all claims 1-5 is the point that "An image pickup device comprising a prism unit having a plurality of prisms jointed without any gap for resolving an incident optical signal into components of three primaries of RGB, and first to third image pickup elements for photoelectrically converting the individual optical signals of the RGB resolved by the prism unit, independently of one another to output first to third pixel signals, further comprising an image pickup unit arranged such that, when a horizontal pixel array spacing in the image pickup elements is Ph, the shift Wh of the first image pickup element to the remaining image pickup elements takes a relation of Wh = (1 + a)Ph/2 (a: a constant), a sample hold unit for subjecting the pixel signals outputted from the image pickup unit, individually to sampling and holding treatments, an automatic gain control unit for performing such a gain control that the signal levels of the pixel signals outputted from the sample hold unit may be constant, and a signal processing unit for generating a brightness signal and a color difference signal on the basis of the pixel signals outputted from the automatic gain control unit", and the point of comprising a CCD drive control unit for controlling the actions of the first to third image pickup elements independently of one another and the first to third image pickup elements to add the pixels in the horizontal direction.
However, the aforementioned matter is nothing but a well-known one. Consequently, the aforementioned matter is not the "special technical feature" within the meaning of PCT Rule 13.2, second sentence.

Thus, the "special technical feature" of the invention dividing the claim is as follows. Since these inventions are not so technically related as to involve one or two or more of the same or corresponding special technical features, they cannot be considered so relative as to form a single general inventive concept.

First Invention: Claims 1-3
An image pickup device comprising a horizontal inversion unit for horizontally inverting at least a third one of pixel signals to be outputted from the automatic gain control unit, to output the third pixel signal to the signal processing unit, and a CCD control unit for controlling the actions of the first to third image pickup elements independently of one another and for adding the pixels in the horizontal direction by 2n+1 (n = 0, 1, 2, $\cdots$, and so on), wherein the CCD drive control unit adds the first pixel signal to the second pixel signal in the combination of (2n + 1) pixels containing pixels shifted by n pixels, and adds the third pixel signal in combination of pixels corresponding to the remainder which is obtained by dividing the effective pixel number of the image pickup elements by 2n + 1.

Second Invention: Claims 4 and 5
An image pickup device comprising an average level calculation unit for calculating the average level of brightness signal in the pixel signals to be outputted from said automatic gain amplification unit, a CCD drive control unit for controlling the combination of the pixels to be added in the horizontal direction in the plural image pickup elements, independently of the image pickup elements, a CDS control unit for controlling the plural sample hold circuits independently of each other,

(continued to next sheet)

Form PCT/ISA/210 (extra sheet) (April 2005)

| **INTERNATIONAL SEARCH REPORT** | International application No. |
| --- | --- |
| | PCT/JP2005/018751 |

and a system control unit for changing the combination of the pixel addition by the CCD drive control unit and the sample point at the time synchronously when the plural sample hold units perform the sampling actions, wherein the system control unit controls not to perform the pixel addition to the CCD drive control unit and the CDS control unit, in case the average value calculated by the average level calculation unit is at a predetermined value or more, but to perform the pixel addition to the CCD drive control unit and the CDS control unit, in case the average value is less than the predetermined value.

Form PCT/ISA/210 (extra sheet) (April 2005)

**EP 1 821 549 A1**

REFERENCES CITED IN THE DESCRIPTION

**Patent documents cited in the description**

- JP 50159618 A